# EUROPÄISCHE PATENTSCHRIFT

(11) **EP 1 392 423 B1**
(45) Veröffentlichungstag und Bekanntmachung des Hinweises auf die Patenterteilung: **02.11.2005**
(21) Anmeldenummer: 02737859.5
(22) Anmeldetag: 31.05.2002
(51) Int. Cl.: B01J 2/10

(54) **EINRICHTUNG ZUR ZUFÜHRUNG EINES TROCKNUNGSGASES IN EINEN MISCHGRANULATOR**
DEVICE FOR FEEDING A DRYING GAS TO A MIXING GRANULATOR
DISPOSITIF D'INTRODUCTION D'UN GAZ DE SECHAGE DANS UN GRANULATEUR DE MELANGE

(30) Priorität: 01.06.2001 DE 10126783
(43) Veröffentlichungstag der Anmeldung: 03.03.2004
(73) Patentinhaber: Glatt Systemtechnik GmbH, 01277 Dresden (DE)
(72) Erfinder: KNORR, Wolfgang, 01257 Dresden (DE); JAENSCH, Barbara, 01279 Dresden (DE)
(74) Vertreter: Pätzelt, Peter
(86) Internationale Anmeldenummer: PCT/DE2002/002036
(87) Internationale Veröffentlichungsnummer: WO 2002/098550

(56) Entgegenhaltungen:
- EP-A- 0 385 956
- EP-A- 0 609 498
- US-A- 4 511 093

## Beschreibung

Die Erfindung betrifft eine Einrichtung zur Zuführung eines Trocknungsgases in einen Mischgranulator mit einer Mischkammer und einem rotierenden Rührwerk, welches radial zur Rührwerksachse angeordnete Mischerschaufeln aufweist.

In derartigen Mischgranulatoren wird bei rotierendem Rührwerk ein Pulver und ein flüssiges Bindemittel in die Mischkammer eingebracht und vermischt. Daraus bildet sich als Mischprodukt eine teigartige Masse, die mittels eines mechanisch wirkenden Zerhackers sofort in granulatartige Teilchen zerkleinert wird. In der Folge werden die granulatartigen Teilchen während der Umwälzung durch das Rührwerk mittels eines Trocknungsgases zu einem handhabbaren Granulat getrocknet. Moderne Mischgranulatoren arbeiten mit hohen Arbeitsleistungen, wobei in der Zeiteinheit eine ausreichend hohe Menge Trocknungsgas in die Mischkammer eingeleitet und andererseits auch wieder abgeleitet werden muss.

Nach dem Stand der Technik sind verschiedene Lösungen bekannt, das Trocknungsgas in die Mischkammer einzuführen. So gibt die EP 385 956 B1 u.a. eine Vorrichtung zur Herstellung eines Schüttgutes in der Form von Kugeln mit kleinem Durchmesser aus fein pulverisierten Material an. In einem Kessel rotieren um eine vertikale Achse Bodenschaufeln und es sind Mittel zum Einblasen und Absaugen eines Gases oder Gasgemisches vorhanden. Zur Einführung des Gases ist am Boden des Kessels eine ringförmige poröse Wandung vorgesehen, die sich radial im Bereich einer porösen unteren Fläche der Bodenschaufeln befindet. Das flächig durch den Boden der Mischkammer eintretende Trocknungsgas wird somit unter die Bodenschaufeln geleitet.

In der JP 50 49 901 A wird ein Mischgranulator beschrieben, bei dem ein Rührwerk mit vertikaler Achse und Mischerschaufeln am Boden des Mischgranulators angeordnet ist. Dabei ist der zentrale Teil des Rührwerkes glockenförmig ausgebildet, wobei die Mischerblätter im Wesentlichen unten angebracht sind. Über eine Gaszuführungsleitung kann Trocknungsgas in den oberen Bereich des glockenförmigen Rotorteiles geleitet werden und strömt entlang der inneren Wandung nach unten bis es im Bereich der Mischerblätter in die Kammer des Mischgranulators einströmt.

In der EP0 609 498 A1 wird ein Trockner für Granulat beschrieben, bei dem ein Rührwerk mit vertikaler Achse und Mischerschaufeln angeordnet ist. Durch die hohl ausgebildete Achse kann ein Trocknungsgas zugeführt werden, welches über Öffnungen im unteren Bereich der Achse an das Granulat abgegeben wird.

Der Erfindung liegt als Aufgabe zugrunde, eine Einrichtung zur Zuführung eines Trocknungsgases in einen Mischgranulator der eingangs beschriebenen Art anzugeben, die die wirksame Zuführung einer großen Menge eines Trocknungsgases ermöglicht.

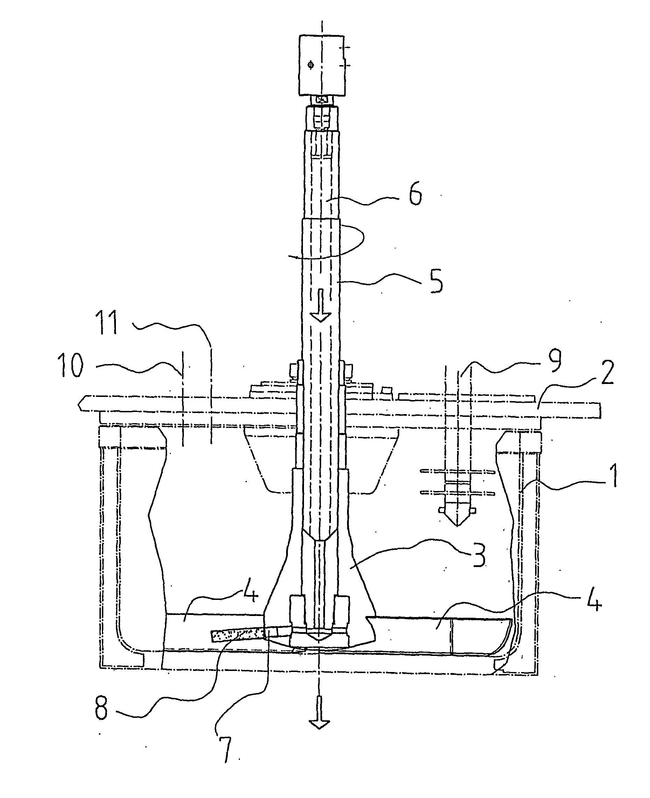

Die Erfindung löst die Aufgabe durch die im kennzeichnenden Teil des Anspruchs 1 angegebenen Merkmale. Vorteilhafte Weiterbildungen der Erfindung sind in den Unteransprüchen gekennzeichnet und werden nachstehend zusammen mit der Beschreibung der bevorzugten Ausführung der Erfindung, einschließlich der Zeichnung, näher dargestellt.

Die Erfindung besteht im Kern darin, dass das Trocknungsgas über die Achse des Rührwerkes zugeführt wird und an jeder der Mischerschaufeln eine Ausgangsleitung vorhanden ist, die unterhalb und in Drehrichtung hinter den Mischerschaufeln mindestens eine Austrittöffnung aufweist.

Durch die Integration der Zuführungsleitung in die Rotorachse erfolgt die Zuführung des Trocknungsgases mit minimalem Raumbedarf und ohne gesonderte Gasleitungen. Der Austritt des Trocknungsgas erfolgt in den.Raum, der im Wesentlichen frei vom Granulat ist, da dieses an den Vorderflächen der Mischerschaufeln nach oben geschleudert wird. Das Trocknungsgas strömt in der Folge großflächig durch das nach dem Aufwirbeln wieder herabfallende Granulat und kann dabei ausgesprochen wirkungsvoll die Feuchtigkeit aus dem Granulat abführen. Die erfindungsgemäße Lösung ermöglicht dabei insbesondere auch die wirkungsvolle Zuführung sehr großer Mengen Trocknungsgas.

Die praktische Ausgestaltung der Austrittsöffnung ist in verschiedener Art, z. B. nach Anspruch 2 bis 4 möglich. Danach erstrecken sich die Auslassöffnungen mindestens teilweise über die Länge der Mischerschaufeln. Das kann in Form einfacher Austrittschlitze oder über poröse Auslasselemente erfolgen. Ziel der einzelnen Lösungen ist es dabei, jeweils eine flächige Austrittöffnungen zu schaffen. Soweit gesonderte Austrittsöffnungen verwendet werden, ist es vorteilhaft, die entsprechenden Elemente über als solche bekannte Schnellverschlüsse mit der Ausgangsleitung zu verbinden.

Insgesamt ist die Erfindung nicht an eine besondere Lage der Achse oder Lagerung des Rührwerkes gebunden. Es hat sich jedoch als sehr vorteilhaft erwiesen, die Achse des Rührwerkes vertikal an einem Mischgranulator mit statischem Deckel und einer vertikal absenkbaren Mischkammer anzuordnen. Bei einem derartigen Mischgranulator können auch alle weiteren Elemente, wie die Zuführungen für die Ausgangsmaterialien des herzustellenden Granulates, den erforderlichen Zerhacker und die Absaugleitung für das Trocknungsgas an dem statischen Deckel angeordnet werden. Die vertikal absenkbare Mischkammer ist dann völlig frei von technologisch erforderlichen Bauelementen und kann z.B. vorteilhaft entleert und gereinigt werden.

Der besondere Vorteil der Erfindung besteht darin, dass ohne gesonderte Zuführungsleitungen über die Achse des Rührwerkes eine große Menge Trocknungsgas zugeführt und über die erfindungsgemäßen Auslassöffnungen flächig unterhalb des umwälzenden Granulates in die Mischkammer eingebracht werden kann.

Die Erfindung wird nachstehend an einem Ausführungsbeispiel näher erläutert werden.

Die Zeichnung zeigt einen Teilschnitt durch einen Mischgranulator mit einer erfindungsgemäßen Einrichtung zur Zuführung von Trocknungsgas.

Der Mischgranulator besteht aus einem Gehäuse 1, einem Deckel 2 und einem im Deckel 2 gelagerten Rührwerk 3. Das' Gehäuse 1 ist doppelwandig ausgeführt und kann mittels eines Fluids temperiert werden. Der Deckel 2 ist innerhalb eines nicht dargestellten Gestells statisch angeordnet und das Gehäuse 1 ist vertikal nach unten absenkbar.

In der dargestellten Arbeitsstellung taucht las Rührwerk 3 in das Gehäuse 1 ein und am Boden des Gehäuses 1 ist lediglich ein konstruktiv erforderlicher minimaler Spalt zwischen den beiden Elementen vorhanden.

Das Rührwerk 3 besteht im Wesentlichen aus einer Antriebswelle 5 und drei radial daran angeordneten Mischerschaufeln 4. Der Drehantrieb des Rührwerkes 3 befindet sich oberhalb des Deckels' 2 und ist in der Zeichnung nicht dargestellt.

Zur Zuführung von Trocknungsgas in die Mischkammer ist in der Antriebswelle 5 des Rührwerkes 3 eine Zuführungsleitung 6 ausgebildet. Die Zuführungsleitung 6 endet unten in der Antriebswelle 5 und teilt sich im Bereich der Mischerschaufeln 4 in je eine Auslassleitung 7 zugeordnet zu jeder der Mischerschaufeln 4. Die Auslassleitungen 7 enden an Auslassöffnungen 8, die sich in Drehrichtung der Antriebswelle 5 hinter den Mischerschaufeln 4 befinden. Im Ausführungsbeispiel sind die Auslassöffnungen 8 in Form von Patronen aus einem porösen Sinterkörper ausgebildet. Die Patronen sind in die Auslassleitung 7 eingeschraubt. Die Befestigung kann auch mittels Schnellverbindungen, z.B. Bajonettverschlüsse, realisiert werden.

Die für einen Mischgranulator technologisch weiter erforderlichen Elemente sind im Ausführungsbeispiel ausschließlich am Deckel 2 angeordnet. Dazu gehören die nur im Prinzip angedeuteten Elemente Zerhacker 9, Zuführungseinrichtungen 10 für die Ausgangsstoffe und eine Abgasleitung 11.

Beim Betrieb der erfindungsgemäßen Einrichtung wird ein Trocknungsgas über die Zuführungsleitung 6 zugeführt. Der Gasstrom teilt sich am unteren Ende der Antriebswelle 5 in drei Einzelströme innerhalb der Ausgangsleitungen 7 auf und tritt über die drei Patronen als Austrittsöffnungen 8 großflächig in die Mischkammer ein. Dabei erfolgt der Eintritt in die Mischkammer in Drehrichtung hinter und unterhalb der Mischerschaufeln 4 in tunnelartige Räume innerhalb des umwälzenden Granulates. Von dort strömt das Trocknungsgas großflächig durch das umwälzende Granulat hindurch und nimmt mit großer Effektivität Feuchtigkeit aus dem Granulat auf und führt es über die Abgasleitung 11 aus der Mischkammer ab.

Die Erfindung ist selbstverständlich nicht auf das beschriebene Ausführungsbeispiel beschränkt. So ist es ohne weiteres möglich, das Rührwerk anders, z.B. auch mit anderen Mischerschaufeln, zu gestalten, die Achse der Antriebswelle in anderer Position anzuordnen oder die Austrittöffnung abzuwandeln. Auch können in der Achse des Rührwerkes mehrere Zuführungsleitungen ausgebildet sein. Unter die Erfindung fallen auch Lösungen, bei denen nicht' an jeder der vorhandenen Mischerschaufeln, z.B. wenn diese in mehreren Ebenen vorhanden sind, eine Auslassöffnung vorhanden ist.

### Liste der verwendeten Bezugszeichen

- 1: Gehäuse
- 2: Deckel
- 3: Rührwerk
- 4: Mischerschaufel
- 5: Antriebswelle
- 6: Zuführungsleitung
- 7: Auslassleitung
- 8: Auslassöffnung
- 9: Zerhacker
- 10: Zuführungseinrichtung
- 11: Abgasleitung

## Patentansprüche

1. Einrichtung zur Zuführung eines Trocknungsgases in einen Mischgranulator mit einer Mischkammer und einem rotierenden Rührwerk (3), an dem radial zu einer Antriebswelle (5) Mischerschaufeln (4) angeordnet sind, **dadurch gekennzeichnet, dass** innerhalb der Antriebswelle (5) des Rührwerkes (3) eine Zuführungsleitung (6) für das Trocknungsgas vorhanden ist, an die sich im Bereich jeder Mischerschaufel (4) je eine Ausgangsleitung (7) anschließt und dass an jeder Ausgangs-' leitung (7) unterhalb und in Drehrichtung hinter den Mischerschaufeln (4) mindestens eine Austrittsöffnung (8) vorhanden ist.

2. Einrichtung nach Anspruch 1, **dadurch gekennzeichnet, dass** die sich die Austrittsöffnung (8) mindestens teilweise über die Länge der Mischerschaufeln (4) erstreckt.

3. Einrichtung nach Anspruch 2, **dadurch gekennzeichnet, dass** die Austrittsöffnung (8) schlitzförmig ausgebildet ist.

4. Einrichtung nach Anspruch 2, **dadurch gekennzeichnet, dass** als Austrittsöffnung (8) ein poröses Element vorhanden ist, über'das das Trocknungsgas flächig austreten kann.

5. Einrichtung nach einem der Ansprüche 1 bis 4, **dadurch gekennzeichnet, dass** die Austrittsöffnung (8) mittels eines bekannten Schnellverschlusses mit der Ausgangsleitung (7) verbunden ist.

6. Einrichtung nach einem der Ansprüche 1 bis 5, **dadurch gekennzeichnet, dass** der Mischgranulator einen oberen statischen Deckel (2) und ein vertikal absenkbares Gehäuse (1) aufweist und das Rührwerk (3) mit vertikaler Achse im Deckel (2) gelagert ist.

7. Einrichtung nach Anspruch 6, **dadurch gekennzeichnet, dass** am Deckel (2) als weitere technologische Einrichtungen mindestens ein Zerhacker (9) und/oder Zuführungseinrichtungen (10) für Ausgangsmaterial und/oder eine Abgasleitung (11) für das Trocknungsgas vorhanden sind.

## Claims

1. Device for feeding a drying gas into a mixing granulator with a mixing chamber and a rotating agitator (3), on which mixer blades (4) are arranged in a radial position with respect to a drive shaft (5), **characterized in that** inside the drive shaft (5) of the agitator (3) there is a feeder line (6) for the drying gas, to which one exit line (7) each is connected in the area of each mixer blade (4), and **in that** at each exit line (7) there is at least one outlet opening (8) underneath and, in the direction of the rotation, behind the mixer blades (4).

2. Device according to Claim 1, **characterized in that** the outlet opening (8) extends at least partially over the length of the mixer blades (4).

3. Device according to Claim 2, **characterized in that** the outlet opening (8) is embodied in the form of a slit.

4. Device according to Claim 2, **characterized in that** a porous element, via which the drying gas can exit in a flat manner, is present as the outlet opening (8).

5. Device according to one of Claims 1 to 4, **characterized in that** the outlet opening (8) is connected to the exit line (7) by means of a known quick-release fastener.

6. Device according to one of Claims 1 to 5, **characterized in that** the mixing granulator has an upper static cover (2) and a housing (1) that can be lowered vertically and that the agitator (3) is supported with a vertical axis in the cover (2).

7. Device according to Claim 6, **characterized in that** on the cover (2) there are, as additional technical devices, at least one chopper (9) and/or feeding devices (10) for the base material and/or a discharge line (11) for the drying gas.

## Revendications

1. Dispositif d'introduction d'un gaz de séchage dans un granulateur de mélange comprenant une chambre de mélange et un mélangeur rotatif (3), sur lequel sont disposées radialement par rapport à un arbre d'entraînement (5) des pales de mélange (4), **caractérisé en ce qu'**à l'intérieur de l'arbre d'entraînement (5) du mélangeur (3) est prévue une conduite d'amenée (6) pour le gaz de séchage, à laquelle se raccorde dans la région de chaque pale de mélange (4), à chaque fois une conduite de sortie (7) et **en ce que** sur chaque conduite de sortie (7) est prévue au moins une ouverture de sortie (8) en dessous, et dans le sens de rotation, derrière les pales de mélange (4).

2. Dispositif selon la revendication 1, **caractérisé en ce que** l'ouverture de sortie (8) s'étend au moins partiellement sur la longueur des pales de mélange (4).

3. Dispositif selon la revendication 2, **caractérisé en ce que** l'ouverture de sortie (8) est réalisée en forme de fente.

4. Dispositif selon la revendication 2, **caractérisé en ce que** l'on prévoit en tant qu'ouverture de sortie (8) un élément poreux par le biais duquel le gaz de séchage peut sortir en nappe.

5. dispositif selon l'une quelconque des revendications 1 à 4, **caractérisé en ce que** l'ouverture de sortie (8) est connectée à la conduite de sortie (7) au moyen d'une fermeture rapide connue.

6. Dispositif selon l'une quelconque des revendications 1 à 5, **caractérisé en ce que** le granulateur de mélange présente un couvercle supérieur statique (2) et un boîtier (1) abaissable verticalement, et le mélangeur (3) est monté avec un axe vertical dans le couvercle (2).

7. Dispositif selon la revendication 6, **caractérisé en ce que** l'on prévoit sur le couvercle (2), en tant que dispositifs technologiques supplémentaires, au moins un hacheur (9) et/ou des dispositifs d'alimentation (10) pour du matériau de départ et/ou une conduite de gaz d'échappement (11) pour le gaz de séchage.
